# EUROPEAN PATENT APPLICATION

(11) **EP 3 812 172 A1**
(43) Date of publication of application: **28.04.2021**
(21) Application number: 19823650.7
(22) Date of filing: 14.06.2019
(51) Int. Cl.: B60C 9/22, B60C 1/00

(54) **TIRE**

(30) Priority: 20.06.2018 JP 2018117343
(71) Applicant: Bridgestone Corporation, Chuo-Ku Tokyo 104-8340 (JP)
(72) Inventor: KATAYAMA, Masahiro, Tokyo 104-8340 (JP)
(74) Representative: Oxley, Robin John George
(86) International application number: PCT/JP2019/023763
(87) International publication number: WO 2019/244808

(57) **Abstract**

A belt of a tire is configured with two resin-covered cords that are wound in a spiral pattern onto a carcass ply. Each of the resin-covered cords is configured by covering a reinforcing cord with a covering resin, and has a cross-section profile in a tire axial direction that is trapezoidal shape. The belt is configured by winding one of the resin-covered cords with its upper base side at a tire radial direction outer side, and winding the other of the resin-covered cords with its upper base side at the tire radial direction inner side between portions of the one of the resin-covered cords. Thus, join portions that are inclined toward different sides in the tire axial direction are alternately formed at a tire radial direction inner side along the tire axial direction in the belt.

## Description

### Technical Field

The present disclosure relates to a tire.

### Background Art

Japanese Patent Application Laid-Open (JP-A) No. 2014-210487 discloses a tire with a configuration in which a reinforcing cord is covered in resin to form a reinforcing cord member, and the reinforcing cord member is wound in a spiral pattern onto an outer circumference of a tire frame member. This tire includes a belt configured by joining the reinforcing cord member that has been wound in a spiral pattern onto the outer circumference of the tire frame member to the outer circumference of the tire frame member, and joining together portions of the reinforcing cord member that are adjacent to each other in a tire axial direction.

### SUMMARY OF INVENTION

### Technical Problem

In JP-ANo. 2014-210487, the reinforcing cord member configured by covering the reinforcing cord in resin has a rectangular shaped cross-section profile, and adjacent portions of this reinforcing cord member that have rectangular shaped cross-section profiles are joined together in the tire axial direction. Since join faces between the mutually adjacent portions of the reinforcing cord member in the tire axial direction run in the same direction with respect to the tire radial direction, there is room for improvement with respect to the level of join in the reinforcing cord member.

In consideration of the above circumstances, an object of the present disclosure is to improve the level of join of a resin-covered cord that forms a belt, and thus improve the durability of a tire.

### Solution to Problem

A tire according to the present disclosure includes a circular tire frame member, a first resin-covered cord, a second resin-covered cord, and a belt. The first resin-covered cord is formed with a reinforcing cord that is covered in resin, the first resin-covered cord having a cross-section profile in a tire axial direction in which a pair of opposing edges are disposed so as to oppose each other in a tire radial direction and a protruding shape is formed protruding from one of the pair of opposing edges toward the other of the pair of opposing edges, in a case in which the first resin-covered cord has been wound in a spiral pattern onto an outer circumference of the tire frame member. The second resin-covered cord is formed with a reinforcing cord that is covered in resin, the second resin-covered cord together with the first resin-covered cord have a cross-section profile in which opposing edges at different sides from the pair of opposing edges of the first resin-covered cord are inclined in the same direction with respect to the tire radial direction, in a case in which the second resin-covered cord has been wound in a spiral pattern onto the outer circumference of the tire frame member so as to contact the first resin-covered cord in the tire axial direction. The belt is configured by the first resin-covered cord and the second resin-covered cord, the first resin-covered cord being wound so as to protrude toward one side in the tire radial direction, the second resin-covered cord being wound so as to be disposed between portions of the first resin-covered cord that are adjacent in the tire axial direction, the first resin-covered cord and the second resin-covered cord being joined together at a join face configured by entire faces that oppose each other in the tire axial direction of the first resin-covered cord and the second resin-covered cord, and the first resin-covered cord and the second resin-covered cord being joined to the tire frame member.

In the tire of the present disclosure, the first resin-covered cord and the second resin-covered cord are wound in spiral patterns onto the outer circumference of the circular tire frame member to form the belt. The first and second resin-covered cords are formed by covering the reinforcing cord in resin, and the reinforcing cord is wound in a spiral pattern onto the outer circumference of the tire frame member.

In the belt, the first resin-covered cord is wound so as to protrude toward the one side in the tire radial direction, and the second resin-covered cord is wound so as to be disposed between portions of the first resin-covered cord that are adjacent in the tire axial direction, such that the first and second resin-covered cords are alternately disposed along the tire axial direction. Moreover, the first resin-covered cord and the second resin-covered cord of the belt are joined to the outer circumference of the tire frame member, and the join face configured by the entire faces that oppose each other in the tire axial direction of the first resin-covered cord and the second resin-covered cord are joined together.

Note that in the cross-section profile in the tire axial direction of the first resin-covered cord, the pair of opposing edges are disposed so as to oppose each other in the tire radial direction, and a protruding shape is formed protruding from one of the pair of opposing edges toward the other of the pair of opposing edges. When the second resin-covered cord has been wound in a spiral pattern onto the outer circumference of the tire frame member so as to contact the first resin-covered cord in the tire axial direction, the second resin-covered cord together with the first resin-covered cord form a cross-section profile in which the opposing edges at different sides from the pair of opposing edges of the first resin-covered cord are inclined in the same direction with respect to the tire radial direction.

Thus, slopes of the join faces of the second resin-covered cord differ at the other side in the tire radial direction (acute angle side) with respect to the both sides in the tire axial direction of the first resin-covered cord, such that join faces with different slopes with respect to the tire radial direction are alternately formed along the tire axial direction in the belt. Since the join faces with different slopes (orientations) with respect to the tire radial direction can be alternately formed along the tire axial direction, there is no specific orientation in the belt and the durability of the belt can be improved in comparison to cases in which the join faces are oriented in the same direction. This enables the durability of the tire to be improved.

### Advantageous Effects of Invention

The present disclosure has an advantageous effect of enabling the join faces with different orientations with respect to the tire radial direction to be alternately provided along the tire axial direction, thereby enabling the durability of the belt in which the first and second resin-covered cords are joined together to be improved, and enabling the durability of the tire to be improved.

### BRIEF DESCRIPTION OF DRAWINGS

Fig. 1 is a schematic cross-section illustrating relevant portions of a tire according to an exemplary embodiment, on one side of a tire equatorial plane.
Fig. 2 is a cross-section illustrating relevant portions of a belt according to an exemplary embodiment.
Fig. 3 is a cross-section illustrating relevant portions of a belt provided to a tire, as sectioned along a tire axial direction.
Fig. 4 is a schematic diagram of relevant portions in a winding process of a resin-covered cord.
Fig. 5 is a schematic diagram illustrating winding of a resin-covered cord onto a core using a press roller.
Fig. 6A is a cross-section illustrating relevant portions of a belt according to a modified example, as sectioned along the tire axial direction.
Fig. 6B is a cross-section illustrating relevant portions of a belt according to another modified example, as sectioned along the tire axial direction.

### DESCRIPTION OF EMBODIMENTS

Detailed explanation follows regarding exemplary embodiments of the present invention, with reference to the drawings.

A tire according to the present disclosure includes a circular tire frame member, a first resin-covered cord, a second resin-covered cord, and a belt. The first resin-covered cord is formed by covering a reinforcing cord in resin. When the first resin-covered cord has been wound in a spiral pattern onto an outer circumference of the tire frame member, a cross-section profile in a tire axial direction of the first resin-covered cord has a pair of opposing edges that are disposed opposing each other in a tire radial direction and a protruding shape that is formed protruding from one toward the other of the pair of opposing edges. The second resin-covered cord is formed by covering a reinforcing cord in resin. When the second resin-covered cord has been wound in a spiral pattern onto the outer circumference of the tire frame member so as to contact the first resin-covered cord in the tire axial direction, the second resin-covered cord forms a cross-section profile together with the first resin-covered cord in which opposing edges, which are located at different sides from the pair of opposing edges of the first resin-covered cord, are inclined in the same direction with respect to the tire radial direction. The belt is configured by winding the first resin-covered cord so as to protrude toward one side in the tire radial direction, winding the second resin-covered cord so as to be disposed between portions of the first resin-covered cord that are adjacent in the tire axial direction, joining the first resin-covered cord and the second resin-covered cord together at a join face configured by faces of the first resin-covered cord and the second resin-covered cord that oppose each other in the tire axial direction, and joining the first resin-covered cord and the second resin-covered cord to the tire frame member.

A tire of the present disclosure may be configured such that the second resin-covered cord is formed with a cross-section profile in the tire axial direction in which a pair of opposing edges are disposed so as to oppose each other in the tire radial direction and a protruding shape is formed protruding from one toward the other of the pair of opposing edges, and the belt is configured by winding the second resin-covered cord between the portions of the first resin-covered cord such that the second resin-covered cord protrudes toward an opposite side from the one side in the tire radial direction.

A tire of the present disclosure may be configured such that at least one of the first resin-covered cord or the second resin-covered cord includes plural reinforcing cords arrayed along the tire axial direction.

A tire of the present disclosure may be configured such that the cross-section profile in the tire axial direction of the second resin-covered cord is obtained by rotating the tire axial direction cross-section profile of the first resin-covered cord about a tire circumferential direction until the cross-section profile of the first resin-covered cord is inverted in the tire radial direction.

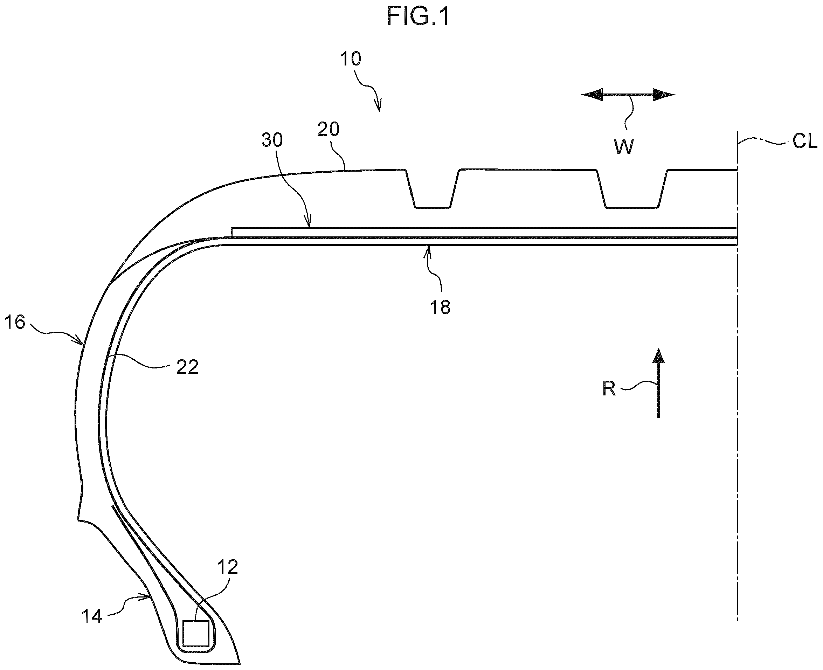

In the present exemplary embodiment, explanation follows regarding an example of a tire 10 serving as a pneumatic tire according to the present disclosure. Fig. 1 is a schematic cross-section illustrating relevant portions of the tire 10 according to the present exemplary embodiment on one side of a tire equatorial plane CL. In the drawings, the arrow R indicates a tire radial direction, the arrow W indicates the tire axial direction (also referred to as a tire width direction), and the reference numeral CL indicates the tire equatorial plane.

In the present exemplary embodiment, the tire axial direction refers to a direction running parallel to a tire rotation axis, and corresponds to the tire width direction. In the present exemplary embodiment, a side further from the tire equatorial plane CL in the tire axial direction is referred to as the tire axial direction outer side, and a side closer to the tire equatorial plane CL in the tire axial direction is referred to as the tire axial direction inner side. In the present exemplary embodiment, the tire radial direction is a direction that intersects the tire axial direction. A side further away from the tire rotation axis in the tire radial direction is referred to as the tire radial direction outer side, and a side closer to the tire rotation axis in the tire radial direction is referred to as the tire radial direction inner side. In the present exemplary embodiment, the tire circumferential direction refers to a rotation direction centered on the tire rotation axis.

In the present exemplary embodiment, "parallel" refers to a state in which extension lines of two mutually opposing lines are considered as non-intersecting for practical purposes. Within the scope of the present exemplary embodiment, it is sufficient that no such intersection is envisaged, and does not indicate the absence of an intersection.

The dimension measurement methods for the various sections are the methods defined in the 2018 Year Book issued by the Japan Automobile Tyre Manufacturers Association (JATMA). In cases in which TRA standards or ETRTO standards apply in the location of use or manufacture, then the applicable standards are adhered to.

The tire 10 is what is referred to as a radial tire and is employed in a passenger car or the like. As illustrated in the example in Fig. 1, the tire 10 includes a pair of bead portions 14 each embedded with an annular bead core 12, side portions 16 continuing toward the tire radial direction outer side from the respective bead portions 14, and a crown portion 18 that couples together the side portions 16 on both sides in the tire width direction (tire axial direction).

Each of the bead cores 12 is configured by a bead cord (not illustrated in the drawings). The bead cord is configured of a metal cord such as a steel cord, an organic fiber cord, a resin-covered organic fiber cord, a hard resin, or the like. Note that the bead core 12 may be omitted from the bead portion 14 if the rigidity of the bead portion 14 can be sufficiently secured.

Each of the side portions 16 forms a portion at the side of the tire 10, and is applied with a gentle convex curve toward an outer side in the tire axial direction from the bead portion 14 toward the crown portion 18. A tread 20 is laid at an outer side in the tire radial direction of the tire 10. The crown portion 18 configures a portion to support the tread 20.

A carcass ply 22 that is wrapped around the respective bead cores 12 straddles between the pair of bead portions 14. The carcass ply 22 is an example of a circular tire frame member, and is for example configured by cords (not illustrated in the drawings) arrayed in the tire circumferential direction and covered with rubber. Note that the tire frame member is not limited to the carcass ply 22, and a member configured of a resin material may be employed. A reinforcing material (such as a polymer material, metal fibers, cord, non-woven fabric, or woven fabric) may be embedded in a resin tire frame member as appropriate.

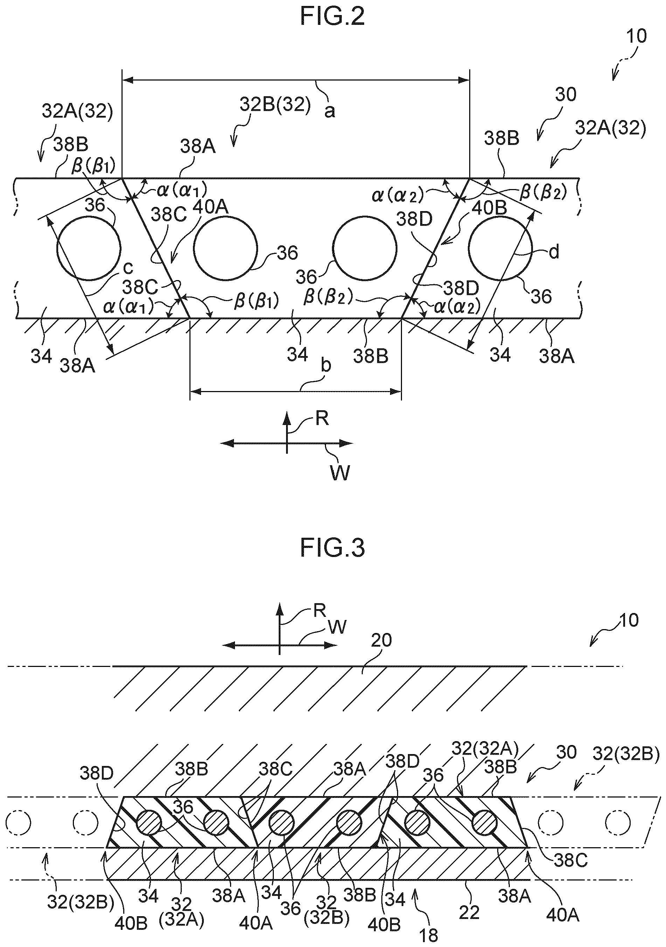

The tire 10 includes an annular belt 30, serving as a reinforcing member. The belt 30 employs a resin-covered cord 32 configuring both a first resin-covered cord and a second resin-covered cord. Fig. 2 is a cross-section illustrating relevant portions of the belt 30, as sectioned along the tire axial direction. Fig. 3 is a cross-section illustrating relevant portions of the tire 10 as sectioned along the tire axial direction.

As illustrated in Fig. 1 and Fig. 3, the belt 30 of the tire 10 is laid around an outer circumference of the carcass ply 22. The belt 30 is joined to the outer circumference of the carcass ply 22 at the crown portion 18. The tread 20 is joined to the tire radial direction outer side of the belt 30 through non-illustrated cushioning rubber

As illustrated in Fig. 2 and Fig. 3, the resin-covered cord 32 is formed by covering one or plural reinforcing cords 36 with resin, namely with covering resin 34 such that the reinforcing cords 36 are fully enclosed within the covering resin 34. A monofilament (single strand) of metal fiber, organic fiber, or the like, or a multifilament (twisted strands) configured by twisting fibers together is employed for each of the reinforcing cords 36. In the present exemplary embodiment, steel cord is employed for the reinforcing cords 36. For example, 1 × 5 steel cord with a diameter of 0.225 mm may be employed for the reinforcing cords 36, or another known steel cord structure may be employed.

A resin material having a higher tensile elastic modulus than the rubber configuring the side portions 16 and the rubber configuring the tread 20 is employed for the covering resin 34 that covers the reinforcing cords 36 of the resin-covered cord 32. For example, a thermoplastic resin, a thermoplastic elastomer (TPE), a thermosetting resin, or the like that has elastic properties may be employed as the covering resin 34 covering the reinforcing cords 36. In consideration of elasticity during vehicle travel and molding properties during manufacture, a thermoplastic elastomer is preferably employed therefor.

Thermoplastic resins (including thermoplastic elastomers) are polymer compounds of materials that soften and flow with increased temperature, and that adopt a relatively hard and strong state when cooled. In the first exemplary embodiment, out of these, polymer compounds forming materials that soften and flow with increasing temperature, that adopt a relatively hard and strong state on cooling, and that have a rubber-like elasticity are considered to be thermoplastic elastomers. Polymer compounds forming materials that soften and flow with increasing temperature, that adopt a relatively hard and strong state on cooling, and do not have a rubber-like elasticity are considered to be non-elastomer thermoplastic resins, these being distinct from thermoplastic elastomers.

Examples of thermoplastic resins (including thermoplastic elastomers) include thermoplastic polyolefin-based elastomers (TPO), thermoplastic polystyrene-based elastomers (TPS), thermoplastic polyamide-based elastomers (TPA), thermoplastic polyurethane-based elastomers (TPU), thermoplastic polyester-based elastomers (TPC), and dynamically crosslinking-type thermoplastic elastomers (TPV), as well as thermoplastic polyolefin-based resins, thermoplastic polystyrene-based resins, thermoplastic polyamide-based resins, and thermoplastic polyester-based resins.

For example, a material with deflection temperature under load (namely under a load of 0.45 MPa) as defined in ISO 75-2 and ASTM D648 of 78°C or above, a tensile yield strength as defined in JIS K7113 of 10 MPa or above, a tensile elongation at break as also defined in JIS K7113 of 50% or above, and a Vicat softening temperature as defined in JIS K7206 (method A) of 130°C may be employed as the above thermoplastic material.

The tensile elastic modulus (as defined in JIS K7113: 1995) of the covering resin 34 that covers the reinforcing cords 36 is preferably no less than 100 MPa. An upper limit of the tensile elastic modulus of the covering resin 34 is preferably no greater than 1000 MPa. Note that the tensile elastic modulus of the covering resin 34 that covers the reinforcing cords 36 is preferably between 200 MPa and 700 MPa.

Thermosetting resins are curable polymer compounds that form a three-dimensional mesh structure with increasing temperature. Examples of thermosetting resins include phenolic resins, epoxy resins, melamine resins, and urea resins. Note that in addition to the thermoplastic resins (including thermoplastic elastomers) or thermosetting resins such as those described above, a general purpose resin such as a (meth)acrylic-based resin, an EVA resin, a vinyl chloride resin, a fluorine-based resin, or a silicone-based resin may be employed as the resin material.

In the present exemplary embodiment, two of the reinforcing cords 36 are employed in the resin-covered cord 32 as an example. In cross-section sectioned along the tire axial direction, the resin-covered cord 32 has a substantially rectangular profile with its length in an array direction of the reinforcing cords 36. A thickness dimension of the resin-covered cord 32 configuring the belt 30 (a thickness dimension in a direction intersecting the array direction of the reinforcing cords 36) is preferably greater than a diameter dimension of the reinforcing cords 36. In other words, the reinforcing cords 36 are preferably completely embedded in the covering resin 34. Specifically, in cases in which the tire 10 is to be employed in a passenger car, the thickness dimension of the resin-covered cord 32 is preferably no less than 0.700 mm.

The resin-covered cord 32 applied in the present exemplary embodiment has a cross-section profile that is trapezoidal-shaped in the tire axial direction in which a pair of opposing edges of a substantial rectangle run parallel to each other, and a protruding shape is formed protruding from one toward the other of the pair of opposing edges. In the present exemplary embodiment, the trapezoidal shaped cross-section profile of the resin-covered cord 32 does not include rectangular or parallelogram shapes. In the present exemplary embodiment, as an example, the resin-covered cord 32 has a cross-section profile that is isosceles trapezoidal shaped in the tire axial direction.

As illustrated in Fig. 3, the resin-covered cord 32 of the belt 30 is laid such that the array direction of the reinforcing cords 36 runs along the tire axial direction. In cross-section of the resin-covered cord 32 along the tire axial direction, the array direction of the reinforcing cords 36 in the resin-covered cord 32 is a direction running parallel to a line linking the centers of the two reinforcing cords 36. Note that in cases in which three or more of the reinforcing cords 36 are employed, the reinforcing cords 36 are arrayed such that the respective centers thereof are on the same straight line, and the array direction is a direction running substantially parallel to a line linking the centers of the respective reinforcing cords 36.

As illustrated in Fig. 2, in a tire axial direction cross-section (cross-section along the tire axial direction), a lower base 38A and an upper base 38B of the resin-covered cord 32 run substantially parallel to each other, and a length a of the lower base 38A is longer than a length b of the upper base 38B (a > b). A length c of a leg 38C and a length d of a leg 38D of the resin-covered cord 32 are substantially equal (c = d). Namely, the resin-covered cord 32 has the cross-section profile in the tire axial direction that protrudes from the lower base 38A toward the upper base 38B.

Thus, in the resin-covered cord 32, an angle (acute angle-side angle) α1 between the lower base 38A and the leg 38C, and an angle (acute angle-side angle) α2 between the lower base 38A and the leg 38D are substantially equal (α1 =α2, referred to as the angle α). Moreover, in the resin-covered cord 32, an angle β1 (an obtuse angle-side angle opposing the angle between the lower base 38A and the leg 38D) between the upper base 38B and the leg 38C, and an angle β2 (an obtuse angle-side angle opposing the angle between the lower base 38A and the leg 38C) between the upper base 38B and the leg 38D are substantially equal (β1 =β2, referred to as the angle β). In the resin-covered cord 32, the angle α and the angle β have a supplementary angle relationship (α + β = 180°, α1 + β1 = 180°, α2 + β2 = 180°). In other words, a cross-section profile of the resin-covered cord 32 along the tire axial direction has line symmetry about a line running along the tire radial direction at a tire axial direction intermediate position of the resin-covered cord 32.

As illustrated in Fig. 3, a resin-covered cord 32 (hereafter referred to as the resin-covered cord 32A when making a particular distinction) is wound in a spiral pattern with its lower base 38A side at the tire radial direction inner side of the belt 30. Moreover, a resin-covered cord 32 (hereafter referred to as the resin-covered cord 32B when making a particular distinction) is wound with its upper base 38B side at the tire radial direction inner side of the belt 30, between the resin-covered cord 32 that has been wound with its lower base 38A side at the tire radial direction inner side. Namely, the resin-covered cord 32A serving as the first resin-covered cord and the resin-covered cord 32B serving as the second resin-covered cord are employed as the resin-covered cord 32 of the belt 30.

In the belt 30, the resin-covered cord 32A with its lower base 38A side at the tire radial direction inner side and the resin-covered cord 32B with its upper base 38B side at the tire radial direction inner side are laid alternately along the tire axial direction. The resin-covered cord 32A that protrudes toward the tire radial direction outer side and the resin-covered cord 32B that protrudes toward the tire radial direction inner side are wound in a spiral pattern so as to appear alternately along the tire axial direction in the belt 30.

In the belt 30, the resin-covered cord 32A and resin-covered cord 32B that are adjacent in the tire axial direction are joined by being welded together. Note that this join of the resin-covered cord 32A and the resin-covered cord 32B is not limited to welding, and the resin-covered cord 32A and the resin-covered cord 32B may be joined together using an adhesive material.

Thus, in the belt 30, a joined portion 40A configuring a join face between respective leg 38C-side faces of the resin-covered cords 32A, 32B, and a joined portion 40B configuring a join face between respective leg 38D-side faces of the resin-covered cords 32A, 32B are alternately formed along the tire axial direction. Weld interfaces are formed at the joined portions 40A, 40B of the belt 30. The weld interfaces are formed running along the join faces of the joined portions 40A, 40B.

The joined portions 40A, 40B are sloped at the angle α with respect to the tire radial direction inner side of the resin-covered cords 32A, 32B. The joined portions 40A, 40B are sloped in different directions such that the joined portions 40A, 40B face away from each other (toward the tire radial direction outer side) from the tire radial direction inner side. Thus, the orientations of the weld interfaces formed at the joined portions 40A, 40B differ between the joined portion 40A and the joined portion 40B.

The belt 30 is formed in an annular shape by winding the elongated resin-covered cords 32A, 32B in a spiral pattern. In the belt 30, the resin-covered cords 32A, 33B that are adjacent in the tire axial direction are welded together at the joined portions 40A, 40B. In a state in which the resin-covered cords 32A, 32B of the belt 30 have been wound in a spiral pattern onto the outer circumference of the carcass ply 22 of the crown portion 18, the lower base 38A of the resin-covered cord 32A and the upper base 38B of the resin-covered cord 32B are joined to the outer circumference of the carcass ply 22.

During this joining of the belt 30 to the carcass ply 22, the covering resin 34 at the lower base 38A of the resin-covered cord 32A and the upper base 38B of the resin-covered cord 32B of the belt 30 is melted, and the belt 30 is pressed against the carcass ply 22. Thus, in the belt 30, the joined portions 40A, 40B are alternately formed along the tire axial direction, and the joined portions 40A, 40B are oriented in different directions from each other at the angle α with respect to the tire radial direction. The joined portions 40A, 40B have weld interface that are oriented in different directions are thereby alternately formed along the tire axial direction in the belt 30.

### Operation

In the tire 10 of the present exemplary embodiment, the belt 30 is joined to the outer circumference of the carcass ply 22 of the crown portion 18. The resin-covered cord 32 (32A, 32B) of the belt 30 is wound in a spiral pattern onto the outer circumference of the carcass ply 22. The reinforcing cords 36 in the resin-covered cords 32A, 32B of the belt 30 are covered by the covering resin 34, and the resin-covered cords 32A, 32B are welded to the outer circumference of the carcass ply 22.

In the belt 30, the resin-covered cords 32A, 32B that are adjacent in the tire axial direction are melted and welded (joined) together at the respective joined portions 40A, 40B, thereby forming the weld interfaces where the covering resin 34 is welded together at the joined portions 40A, 40B.

In the belt 30 of the tire 10, there is a tendency for stress to concentrate at locations where rigidity changes, and bending moment arises around the tire circumferential direction in the belt 30 during vehicle travel and the like. Accordingly, there is a tendency for stress to concentrate at the joined portions 40A, 40B of the belt 30 where the weld interfaces are formed between the resin-covered cords 32A, 32B configured by covering the reinforcing cords 36 with the covering resin 34.

The resin-covered cords 32A, 32B having the cross-section profiles that are trapezoidal shaped in the tire axial direction are employed in the belt 30. The weld interfaces at the joined portions 40A, 40B between the resin-covered cords 32A, 32B that are adjacent in the tire axial direction have different orientations to each other.

Accordingly, in the belt 30, a reduction in weld pressure due to a concentration of stress at the joined portions 40A, 40B is suppressed in comparison to cases in which the orientations of the weld interfaces are aligned in a uniform direction. A reduction (reduction over time) in the join properties at the joined portions 40A, 40B is thus suppressed, even if stress concentrates at the joined portions 40A, 40B of the belt 30 employing the resin-covered cords 32A, 32B configured by covering the reinforcing cords 36 with the covering resin 34. This thereby improves the durability of the belt 30 joined to the outer circumference of the carcass ply 22 in the tire 10, and thus improves the durability of the tire 10.

A single type of the resin-covered cord 32 is applied in the belt 30, and the resin-covered cord 32 is disposed with its upper base 38B side facing the tire radial direction outer side when employed as the resin-covered cord 32A, and is disposed with its upper base 38B side facing the tire radial direction inner side when employed as the resin-covered cord 32B. This enables manufacturing efficiency of the belt 30 of the tire 10 to be improved in comparison to cases in which two types of resin-covered cord having different profiles to each other are employed, and the manufacturing cycle of the belt 30 is made shorter. This enables an increase in the manufacturing cycle of the tire 10, which employs the belt 30 formed using the two resin-covered cords 32A, 32B, to be suppressed.

Moreover, the resin-covered cord 32 (32A, 32B) is configured with the cross-section profile that is an isosceles trapezoidal shape in the tire axial direction. This enables the slope angles of the joined portions 40A, 40B between the resin-covered cords 32A, 32B of the belt 30 with respect to the tire radial direction inner side to be made similar to each other, and also facilitates sloping of the joined portions 40A, 40B toward opposite sides in the tire axial direction. This facilitates manufacture of the belt 30 with improved durability, and thus enables the durability of the tire 10 to be effectively improved. Moreover, when forming the resin-covered cord 32 (32A, 32B) by resin extrusion molding or the like, since the cross-section profile in the tire axial direction of the resin-covered cord 32 (32A, 32B) is defined as a substantially isosceles trapezoidal shape, easier molding is enabled, thus production efficiency of the resin-covered cord 32 (32A, 32B) is improved.

### Belt Manufacture

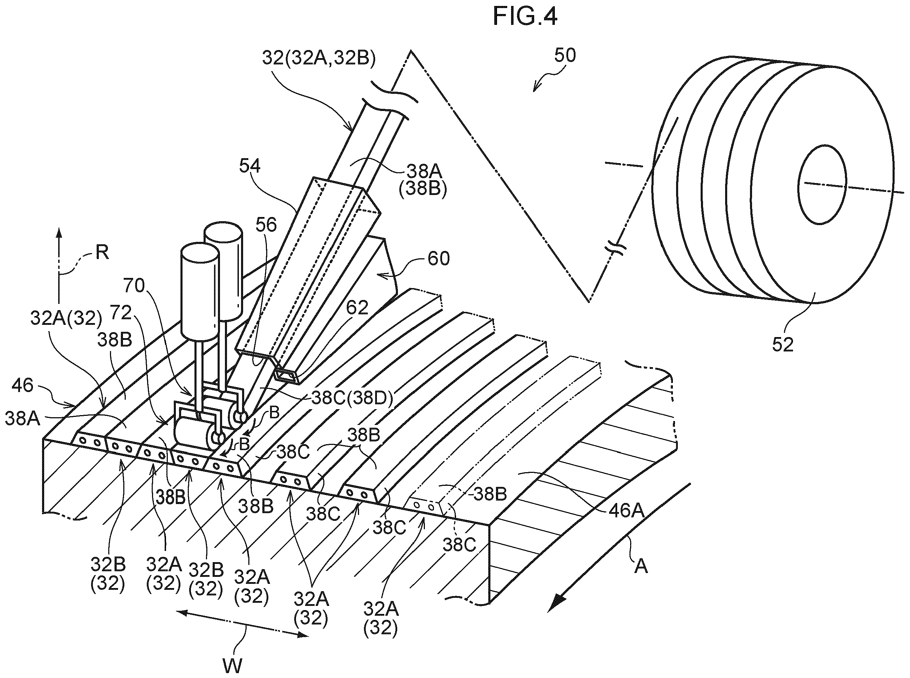

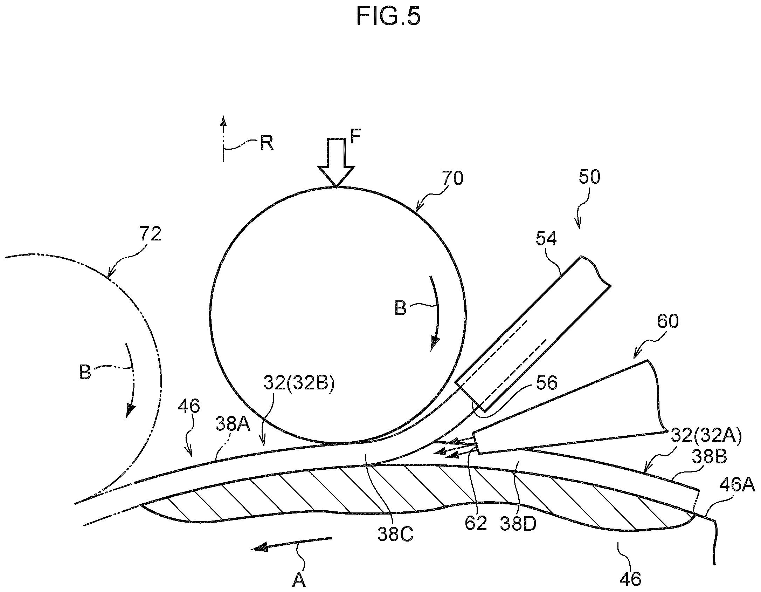

Next, explanation follows regarding manufacture of the annular belt 30. As an example, an annular (drum shaped) core 46 is employed in the manufacture of the belt 30 in the present exemplary embodiment. Fig. 4 is a schematic configuration diagram illustrating relevant portions in a manufacturing process of the belt 30. Fig. 5 is a schematic diagram illustrating relevant portions of the core 46 as viewed along an axial direction.

As illustrated in Fig. 4, an outer circumference of the core 46 configures a winding surface 46A for the resin-covered cord 32. The outer circumference (winding surface 46A) of the core 46 is for example configured from metal. The outer circumference of the core 46 may have a linear cross-section profile along the axial direction or a curved cross-section profile along the axial direction, or may have a combination of a linear cross-section profile part and a curved cross-section profile part. The outer circumference of the core 46 is divisible at plural locations in a circumferential direction, and each of the divided outer circumferential portions is capable of moving so as to retreat toward an inner side in a radial direction (not illustrated in the drawings). This facilitates removal of the annular belt 30 formed on the outer circumference of the core 46.

A support device (not illustrated in the drawings) that rotatably supports the core 46 is employed when winding the resin-covered cords 32A, 32B onto the outer circumference of the core 46. The resin-covered cords 32A, 32B are wound using a cord supply device 50 that supplies the resin-covered cords 32A, 32B, a heating device 60 that heats the resin-covered cord 32, a press roller 70 serving as a pressing implement, a cooling roller 72 serving as a cooling implement, and the like in the vicinity of the outer circumference of the core 46.

The cord supply device 50 is configured including a reel 52 on which the resin-covered cord 32 is taken up, and a guide member 54 with a tubular internal portion through which the resin-covered cord 32 is able to pass. An opening 56 facing toward the outer circumference of the core 46 is formed in the guide member 54. The resin-covered cord 32 that has taken up onto the reel 52 of the cord supply device 50 is used as the resin-covered cords 32A, 32B.

In the cord supply device 50, the resin-covered cord 32 is pulled out from the reel 52 and guided by passing through the tubular internal portion of the guide member 54. The resin-covered cord 32 is then fed out through the opening 56 toward the outer circumference of the core 46. The reel 52 and the guide member 54 of the cord supply device 50 are inverted such that the resin-covered cord 32 is supplied onto the core 46 with positions of the lower base 38A side and the upper base 38B side of the resin-covered cord 32 being invert. The cord supply device 50 is thus capable of supplying the resin-covered cord 32 on the reel 52 as both the resin-covered cords 32A and 32B.

During manufacture of the belt 30, the resin-covered cords 32A, 32B are fed onto the outer circumference of the core 46 by the cord supply device 50 while the core 46 is being rotated by the support device, such that the resin-covered cords 32A, 32B are wound onto the outer circumference of the core. When this is performed, the core 46 and the opening 56 in the cord supply device 50 (guide member 54) are moved relative to one another in the tire axial direction, causing the resin-covered cords 32A, 32B to be wound onto the outer circumference of the core 46 in a spiral pattern. Note that this relative movement between the core 46 and the opening 56 in the guide member 54 is for example performed by moving the core 46 along the tire axial direction.

Moreover, during manufacture of the belt 30, after winding one of the resin-covered cords 32A, 32B onto the core 46 in a spiral pattern, the other of the resin-covered cords 32A, 32B is wound on in a spiral pattern. In the present exemplary embodiment, as an example, the resin-covered cord 32A is wound onto the core 46 first, and then the resin-covered cord 32B is wound onto the core 46.

As illustrated in Fig. 4 and Fig. 5, the heating device 60 is provided with a blower outlet 62. The heating device 60 for example heats air using a heating element (not illustrated in the drawings) while using a fan (not illustrated in the drawings) to cause the heated air to flow to generated a heated airflow, and the heated airflow thus generated is blown out through a blower outlet 62

The blower outlet 62 of the heating device 60 opposes faces of the respective legs 38C, 38D of the resin-covered cord 32A that has been wound onto the core 46 and the resin-covered cord 32B that is being supplied to the core 46. The heating device 60 blows the heated airflow against the faces of the respective legs 38C, 38D of the resin-covered cords 32A, 32B through the blower outlet 62 so as to melt the covering resin 34.

Note that the heating device 60 may also blow the heated airflow through the blower outlet 62 when initially winding the resin-covered cord 32A onto the core 46. Moreover, the heating device 60 is not limited to a configuration employing a heating element and a fan. Any configuration capable of heating and melting the thermoplastic resin may be applied, for example a configuration in which a heating iron contacts the location to be melted (covering resin 34) such that the contact portion is heated and melted in this manner. Alternatively, the heating device 60 may employ radiant heat to heat and melt the location to be melted, or infrared light may be shone onto the location to be melted so as to heat and melt this location.

The press roller 70 presses the resin-covered cords 32A, 32B to be wound onto the core 46 against the outer circumference of the core 46. The cooling roller 72 is disposed further toward a rotation direction downstream side of the core 46 than the press roller 70. The cooling roller 72 presses the resin-covered cord 32B that has been wound onto the outer circumference of the core 46. A liquid cooling source (for example a coolant such as water) flows through the inside of the cooling roller 72, such that heat exchange takes place between the liquid cooling source and the resin-covered cord 32B when the roller surface of the cooling roller 72 contacts the resin-covered cord 32B.

Note that the press roller 70 and the cooling roller 72 are capable of rotating freely, and undergo following rotation (rotation in the arrow B direction) with respect to the rotation direction of the core 46 (the arrow A direction) when pressed against the resin-covered cords 32A, 32B. The roller surfaces of the press roller 70 and the cooling roller 72 are treated so as to prevent molten resin material (covering resin 34) from adhering thereto. The press roller 70 and the cooling roller 72 are preferably capable of adjusting the pressing force (pressure) F applied to the resin-covered cords 32A, 32B.

The resin-covered cord 32B that has been wound onto the core 46 and pressed by the press roller 70 is thus cooled by the cooling roller 72, and the resin-covered cord 32A that has been wound onto the core 46 and the core 46 itself are cooled through the resin-covered cord 32B. Note that the cooling roller 72 may be omitted in cases in which the molten resin material (the covering resin 34 of the resin-covered cords 32A, 32B) is allowed to cool naturally.

During manufacture of the belt 30, first the resin-covered cord 32A is provisionally wound onto the outer circumference of the core 46. During provisional winding of the resin-covered cord 32A, the core 46 attached to the support device is rotated in the arrow A direction, and the resin-covered cord 32A is pulled out from the reel 52 of the cord supply device 50 and fed toward the outer circumference of the core 46 through the opening 56. During this provisional winding of the resin-covered cord 32A, the resin-covered cord 32A wound onto the core 46 is loosely wound in a spiral pattern around the outer circumference of the core 46, such that a spacing between adjacent portions of the lower base 38A of the resin-covered cord 32A in a core axial direction is matched to the length b of the upper base 38B of the resin-covered cord 32B. When this is performed, tension is imparted to the resin-covered cords 32A so as to suppress slippage of the resin-covered cords 32A (slippage in the axial direction of the core 46).

During the provisional winding of the resin-covered cord 32A, the spacing between portions of the lower base 38A of the resin-covered cord 32A that has been wound onto the core 46 is not allowed to become wider than the length b of the upper base 38B of the resin-covered cord 32B. Moreover, during the provisional winding of the resin-covered cord 32A, the resin-covered cord 32A is preferably provisionally fixed to the outer circumference of the core 46, for example by blowing the heated airflow through the blower outlet 62 of the heating device 60.

After this has been performed, the resin-covered cord 32B is wound onto the core 46. During winding of the resin-covered cord 32B, the resin-covered cord 32B is pulled out from the reel 52 of the cord supply device 50 and the resin-covered cord 32B thus pulled out is supplied onto the outer circumference of the core 46 through the opening 56.

During the winding of the resin-covered cord 32B, the resin-covered cord 32B is supplied between the provisionally wound and lined up resin-covered cord 32A while blowing the heated airflow through the blower outlet 62 of the heating device 60 so as to heat the respective leg 38C, 38D-side faces of the resin-covered cords 32A, 32B. In addition thereto, the supplied resin-covered cord 32B is pushed between the resin-covered cord 32A by the press roller 70.

The resin-covered cord 32B is thus slotted between portions of the resin-covered cord 32A and wound in a spiral pattern onto the outer circumference of the core 46. The covering resin 34 of the resin-covered cords 32A, 32B wound onto the core 46 is melted by the heated airflow from the blower outlet 62 of the heating device 60 so as to weld the resin-covered cords 32A, 32B together at the joined portions 40A, 40B (the respective leg 38C-side faces and leg 38D-side faces) (thereby forming the weld interfaces).

Note that as illustrated in Fig. 2, in the resin-covered cord 32A, the legs 38C, 38D are inclined toward the tire axial direction outer sides on progression from the tire radial direction outer side toward the tire radial direction inner side. In the resin-covered cord 32B that is slotted between the portions of the resin-covered cord 32A, the legs 38C, 38D are inclined toward the tire axial direction inner side on progression from the tire radial direction outer side toward the tire radial direction inner side. Accordingly, the resin-covered cord 32B can easily be slotted between the portions of the resin-covered cord 32A by being pushed toward the tire radial direction inner side by the press roller 70.

Moreover, the leg 38C-side face of the resin-covered cord 32B contacts the leg 38C-side face of the resin-covered cord 32A at the joined portion 40A, and the leg 38D-side face of the resin-covered cord 32B contacts the leg 38D-side face of the resin-covered cord 32A at the joined portion 40B. The joined portions 40A, 40B are inclined by an acute angle (angle α) with respect to the tire radial direction, and the joined portions 40A, 40B are inclined in directions approaching each other at the tire radial direction inner side. Accordingly, the resin-covered cord 32B presses the resin-covered cord 32A toward the tire radial direction inner side and the tire axial direction outer sides when applied with the pressing force of the press roller 70. This improves the tightness of contact between the resin-covered cords 32A, 32B at the joined portions 40A, 40B, such that the resin-covered cords 32A, 32B are welded together with a high weld strength pressure at the joined portions 40A, 40B, thus improving the join properties between resin-covered cords 32A, 32B at the joined portions 40A, 40B.

The resin-covered cords 32A, 32B have been welded together in this manner are then cooled and set by pressing the resin-covered cord 32B with the cooling roller 72. The belt 30 is accordingly manufactured by winding the resin-covered cords 32A, 32B in a spiral pattern onto the outer circumference of the core 46 in this manner. In the manufactured belt 30, the weld interfaces oriented in different directions to each other are alternately formed along the tire axial direction.

Note that during manufacture of the belt 30, the tension of the resin-covered cords 32A, 32B supplied to the core 46 may be adjusted by applying a brake to the reel 52 of the cord supply device 50, by providing a tension adjustment roller (not illustrated in the drawings) on a guidance path of the resin-covered cords 32A, 32B, or the like. This enables snaking or the like of the resin-covered cords 32A, 32B as they are being wound onto the core 46 to be suppressed, enabling a high quality belt 30 to be manufactured in which the resin-covered cords 32A, 32B are wound on in a spiral pattern at a uniform pitch.

The manufactured belt 30 is then removed from the core 46, and is pressure-welded to the outer circumference of the carcass ply 22 in a vulcanization process or the like to manufacture the tire 10. Although the core 46 is employed during manufacture of the belt 30, the carcass ply 22 may be employed instead of the core 46, such that the belt 30 is manufactured by winding the resin-covered cords 32A, 32B in a spiral pattern onto the outer circumference of the carcass ply 22. In such cases, the carcass ply 22 is attached to a support device, and the resin-covered cord 32A and the resin-covered cord 32B are then wound in spiral patterns onto the outer circumference of the carcass ply 22 in this sequence while rotating the carcass ply 22. This enables the belt 30 to be manufactured by the resin-covered cords 32A, 32B being wound in spiral patterns onto the outer circumference of the carcass ply 22 and joined together.

### Modified Examples of Belt

In the present exemplary embodiment, the belt 30 is formed employing the resin-covered cord 32 having the cross-section profile that is the isosceles trapezoidal shape in the tire axial direction and inverting the resin-covered cord 32 in the tire radial direction so as to use as the resin-covered cords 32A, 32B.

Note that it is sufficient that the second resin-covered cord, when joined to the first resin-covered cord, form a cross-section profile that is a parallelogram shape in the tire axial direction. Thus, the second resin-covered cord is not limited to having the cross-section profile that is a trapezoidal shape in the tire axial direction, and may have a triangular profile. Moreover, the first and second resin-covered cords are not limited to isosceles trapezoidal shaped profiles, and may be configured with trapezoidal shaped profiles other than isosceles trapezoidal shaped profiles that protrude from a lower base side toward an upper base side.

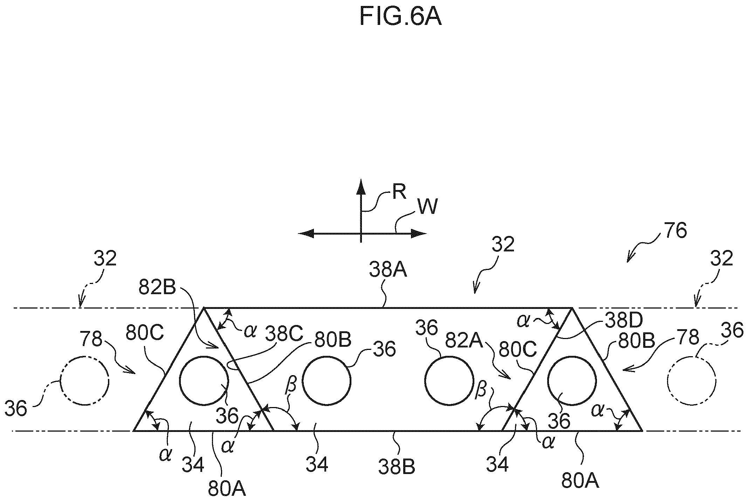

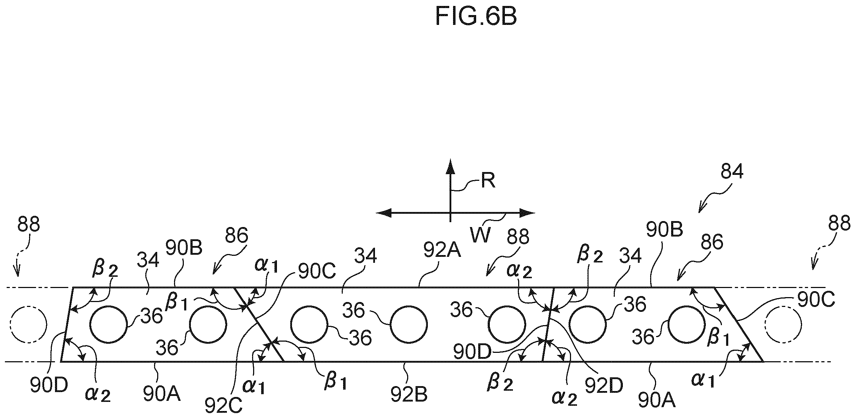

Fig. 6A and Fig. 6B are schematic cross-sections taken along the tire axial direction illustrating relevant portions of belts according to modified examples of the present exemplary embodiment.

As illustrated in Fig. 6A, a belt 76 employs the resin-covered cord 32 as a first resin-covered cord and employs a resin-covered cord 78 as a second resin-covered cord. As an example, the resin-covered cord 78 employs a single reinforcing cord 36, this reinforcing cord 36 being covered with the covering resin 34. As an example, the resin-covered cord 78 has a cross-section profile that is a isosceles triangle shape along the tire axial direction, the length of two edges 80B, 80C being similar to the length of the legs 38C, 38D of the resin-covered cord 32. The cross-section profile in the tire axial direction of the resin-covered cord 78 has line symmetry about a line running along the tire radial direction through a tire axial direction intermediate position of the resin-covered cord 78.

In the belt 76, the resin-covered cord 78 is wound in a spiral pattern at a predetermined spacing in the tire axial direction, such that a base edge 80A of the resin-covered cord 78 is on the tire radial direction inner side. The resin-covered cord 32 of the belt 76 is wound on in a spiral pattern so as to be slotted between portions of the resin-covered cord 78, such that an upper base 38B side of the resin-covered cord 32 is on the tire radial direction inner side (corresponding to the resin-covered cord 32B side of the belt 30). In the belt 76, a leg 38C-side face of the resin-covered cord 32 and an edge 80B-side face of the resin-covered cord 78 are joined together by welding at a join face (joined portion 82B), and a leg 38D-side face of the resin-covered cord 32 and an edge 80C-side face of the resin-covered cord 78 are joined together by welding at a join face (joined portion 82A).

Accordingly, in the belt 76, the combined cross-section profiles in the tire axial direction of the resin-covered cord 32 and the resin-covered cord 78 configure a parallelogram shape. In the belt 76, the joined portions 82A, 82B are alternately formed along the tire axial direction, and the joined portions 82A, 82B have similar incline angles to each other with respect to the tire radial direction inner side. However, the joined portions 82A, 82B are sloped in directions away from each other at the tire radial direction inner side (in directions approaching each other at the tire radial direction outer side if considered in the sequence joined portions 82B, 82A), such that the orientations of the weld interfaces between the joined portions 82A, 82B are different from each other.

Accordingly, weld interfaces with differing orientations are alternately formed along the tire axial direction, thus improving the durability of the belt 76 (in particular the durability with respect to bending moment on both sides of the belt 76 in the tire axial direction that are bent toward the tire radial direction outer side). The belt 76 is thus capable of improving the durability of the tire 10.

As illustrated in Fig. 6B, a belt 84 employs resin-covered cords 86, 88 as a first resin-covered cord and a second resin-covered cord. As an example, the resin-covered cord 86 is configured by two of the reinforcing cords 36 covered with the covering resin 34, and as an example, the resin-covered cord 88 is configured by three of the reinforcing cords 36 covered with the covering resin 34.

The resin-covered cord 86 has a cross-section profile in the tire axial direction in which a lower base 90A and an upper base 90B are parallel to each other, with a length of the lower base 90A being longer than a length of the upper base 90B, such that the resin-covered cord 86 protrudes toward an upper base 90B side. Moreover, in the resin-covered cord 86, a length of one leg 90C is different from a length of the other leg 90D. In this modified example, the length of the leg 90C is longer than the length of the leg 90D.

The resin-covered cord 88 has a cross-section profile in the tire axial direction in which a lower base 92A and an upper base 92B are parallel to each other, with a length of the lower base 92A being longer than a length of the upper base 92B, such that the resin-covered cord 88 protrudes toward an upper base 92B side. Moreover, in the resin-covered cord 88, a length of one leg 92C is different from a length of the other leg 92D. In this modified example, the length of the leg 92C is longer than the length of the leg 92D.

In the resin-covered cord 86, an angle α1 that is an acute angle between the lower base 90A and the leg 90C, and an angle α2 that is an acute angle between the lower base 90A and the leg 90D are different from each other, and an angle β1 that is an obtuse angle between the upper base 90B and the leg 90C and an angle β2 that is an obtuse angle between the upper base 90B and the leg 90D are different from each other. Note that as an example, the angle α2 is larger than the angle α1 (0° < α1 < α2 ≤ 90°), and the angle β2 is smaller than the angle β1 (90° ≤ β2 < β1 < 180°). Note that one of the angles α1, α2 may be substantially a right angle.

In the resin-covered cord 88, the acute angle between the lower base 92A and the leg 92C is set to the angle α1, and the acute angle between the lower base 92A and the leg 92D is set to the angle α2. The obtuse angle between the upper base 92B and the leg 92C is set to the angle β1, and the obtuse angle between the upper base 92B and the leg 92D is set to the angle β2.

In the belt 84, the resin-covered cord 86 is wound on in a spiral pattern at a predetermined spacing in the tire axial direction with the lower base 90A of the resin-covered cord 86 on the tire radial direction inner side, and the resin-covered cord 88 is disposed between the resin-covered cord 86. The resin-covered cord 88 is wound on in a spiral pattern with its upper base 92B side at the tire radial direction inner side such that the resin-covered cord 88 is slotted between portions of the resin-covered cord 86 that are adjacent in the tire axial direction.

In the belt 84, a leg 90C-side face of the resin-covered cord 86 and a leg 92C-side face of the resin-covered cord 88 are joined by being welded together at a join face (joined portion). A leg 90D-side face of the resin-covered cord 86 and a leg 92D-side face of the resin-covered cord 88 are joined by being welded together at a join face (joined portion).

Accordingly, in the belt 84, the joined portions are alternately formed along the tire axial direction, the joined portions have different incline angles to each other with respect to the tire radial direction inner side, and are sloped in opposite directions at the tire radial direction inner side.

Accordingly, weld interfaces with differing orientations are alternately formed along the tire axial direction by the resin-covered cords 86, 88, thus improving the durability of the belt 84 (in particular durability with respect to bending moment about the tire circumferential direction). The belt 84 is thus capable of improving the durability of the tire 10.

The disclosure of Japanese Patent Application No. 2018-117343, filed on June 20, 2018, is incorporated in its entirety by reference herein.

All cited documents, patent applications, and technical standards mentioned in the present specification are incorporated by reference in the present specification to the same extent as if each individual cited document, patent application, or technical standard was specifically and individually indicated to be incorporated by reference.

## Claims

1. A tire, comprising:
a circular tire frame member;
a first resin-covered cord formed with a reinforcing cord that is covered in resin, the first resin-covered cord having a cross-section profile in a tire axial direction in which a pair of opposing edges are disposed so as to oppose each other in a tire radial direction and a protruding shape is formed protruding from one of the pair of opposing edges toward the other of the pair of opposing edges, in a case in which the first resin-covered cord has been wound in a spiral pattern onto an outer circumference of the tire frame member;
a second resin-covered cord formed with a reinforcing cord that is covered in resin, the second resin-covered cord together with the first resin-covered cord having a cross-section profile in which opposing edges at different sides from the pair of opposing edges of the first resin-covered cord are inclined in the same direction with respect to a tire radial direction, in a case in which the second resin-covered cord has been wound in a spiral pattern onto the outer circumference of the tire frame member so as to contact the first resin-covered cord in the tire axial direction; and
a belt configured by the first resin-covered cord and the second resin-covered cord, the first resin-covered cord being wound so as to protrude toward one side in the tire radial direction, the second resin-covered cord being wound so as to be disposed between portions of the first resin-covered cord that are adjacent in the tire axial direction, the first resin-covered cord and the second resin-covered cord being joined together at a join face configured by entire faces that oppose each other in the tire axial direction of the first resin-covered cord and the second resin-covered cord, and the first resin-covered cord and the second resin-covered cord being joined to the tire frame member.

2. The tire of claim 1, wherein:
the second resin-covered cord has a cross-section profile in the tire axial direction in which a pair of opposing edges are disposed so as to oppose each other in the tire radial direction and a protruding shape is formed protruding from one of the pair of opposing edges toward the other of the pair of opposing edges; and
the belt is configured by winding the second resin-covered cord between the portions of the first resin-covered cord such that the second resin-covered cord protrudes toward an opposite side from the one side in the tire radial direction.

3. The tire of claim 1 or claim 2, wherein at least one of the first resin-covered cord or the second resin-covered cord comprises a plurality of the reinforcing cords arrayed along the tire axial direction.

4. The tire of any one of claim 1 to claim 3, wherein the cross-section profile in the tire axial direction of the second resin-covered cord is obtained by rotating the tire axial direction cross-section profile of the first resin-covered cord about a tire circumferential direction until the cross-section profile of the first resin-covered cord is inverted in the tire radial direction.
